(19) Europäisches Patentamt
European Patent Office
Office européen des brevets

(11) **EP 2 771 998 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **12751506.2**

(22) Anmeldetag: **28.08.2012**

(51) Int Cl.:
***H04L 1/24*** *(2006.01)*

(86) Internationale Anmeldenummer:
**PCT/EP2012/066636**

(87) Internationale Veröffentlichungsnummer:
**WO 2013/060504 (02.05.2013 Gazette 2013/18)**

(54) **ÜBERWACHUNG EINER DIFFERENTIELLEN MEHRKANALÜBERTRAGUNGSSTRECKE**

MONITORING OF A DIFFERENTIAL MULTICHANNEL TRANSMISSION LINK

SURVEILLANCE D'UNE VOIE DE TRANSMISSION DIFFÉRENTIELLE À MULTIPLES CANAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2011 DE 102011085280**

(43) Veröffentlichungstag der Anmeldung:
**03.09.2014 Patentblatt 2014/36**

(73) Patentinhaber: **Robert Bosch GmbH**
**70442 Stuttgart (DE)**

(72) Erfinder:
• **STEINBUCH, Dirk**
**71299 Wimsheim (DE)**
• **SCHNABEL, Raik**
**71229 Leonberg (DE)**

(56) Entgegenhaltungen:
**US-A1- 2002 180 414   US-A1- 2008 238 442**
**US-A1- 2009 125 279**

**Beschreibung**

STAND DER TECHNIK

Die Erfindung betrifft ein Verfahren zur Überwachung eines Funktionszustandes einer Übertragungsstrecke zur differentiellen Übertragung eines Signals.

Die differentielle oder symmetrische Signalübertragung ist eine bekannte und weit verbreitete Übertragungstechnik. Sie wird aufgrund ihrer hohen Störsicherheit insbesondere zur hochfrequenten Datenübertragung eingesetzt. Bei der differentiellen Übertragung eines Signals wird auf einem ersten Leiter das gewünschte Signal übertragen, während simultan auf einen zweiten Leiter ein Referenzsignal übertragen wird, welches dem gewünschten Signal entgegengesetzt ist, also beispielsweise dem negativen des gewünschten Signals entspricht. An einem Empfangsort der Übertragungsstrecke kann durch Bildung des Differenzsignals aus dem Signal und dem Referenzsignal der differentielle Signalanteil gewonnen werden, wobei die Amplitude dem doppelten des gewünschten Signals entspricht und Störungen, die sich auf beide Leiter in gleicher Weise auswirken, durch die Differenzbildung eliminiert oder reduziert werden können.

Zur Erhöhung der Zuverlässigkeit ist es bekannt, einen Funktionszustand einer differentiellen Signalübertragungsstrecke zu überwachen.

EP 0 621 702 A2 beschreibt eine Schaltung zur Überwachung des Funktionszustandes der Signalleitungen einer Übertragungsstrecke, auf der Differenzsignale bidirektional übertragen werden können, indem jeweils eine Signalleitung das Potential +5V einer Versorgungsspannungsquelle annimmt und die jeweils andere Signalleitung das Potential 0V eines Massebezuges annimmt. Ein Brückengleichrichter ist an den Signalleitungen der Übertragungstrecke angeschlossen und mit einem Komparator verbunden. Der Brückengleichrichter wandelt den ständigen Wechsel der Differenzsignale auf den Signalleitungen im ordnungsgemäßen Funktionszustand der Übertragungsstrecke in ein konstantes Potential an den Ausgangselektroden um. Bei Ausbleiben einer definierten Spannung am Ausgang des Brückengleichrichters in einem gestörten Zustand der Signalleitungen wird durch die Schaltung eine Spannung am Komparator mit einem im Vergleich zur abgeleiteten Spannung umgekehrten Vorzeichen erzwungen, so dass das Ausgangssignal des Komparators den gestörten Funktionszustand der Signalleitungen anzeigt.

DE 102 37 696 B3 beschreibt ein Verfahren und eine Einrichtung zum Melden eines Übertragungsfehlers auf einer Datenleitung bei differentieller Signaltechnik. Ein in einem mittleren Potentialbereich zwischen den beiden Signalpegeln der beiden Signalleitungen liegender Mittelpegel wird zum Erkennen eines Fehlers ausgewertet. Der Mittelpegel bleibt unverändert, wenn die übertragene binäre Information wechselt, d.h., wenn von einer logischen "1" auf eine logische "0" oder umgekehrt umgeschaltet wird. Bei einem Fehler, etwa einem Kurzschluss eines Signalleiters mit dem Massepotential, verschiebt sich der Mittelpegel, und ein Fehlersignal wird erzeugt. Zum Erfassen der Signalpegel werden zwei Sample-and-Hold-Einrichtungen verwendet, von denen die eine zum Erfassen des Mittelpegels im Falle einer logischen "1" und die andere zum Erfassen des Mittelpegels bei einer logischen "0" eingesetzt wird. Zum Erzeugen des Fehlersignals werden die von den beiden Sample-and-Hold-Einrichtungen gespeicherten Messgrößen herangezogen.

US 2008/0238442 A1 beschreibt ein differenzielles Signalübertragungssystem und einen Flachbildschirm mit demselben. An einem Empfangsende einer differenziellen Signalleitung ist ein Prüfschaltkreis parallel zu einem Terminierungswiderstand angeschlossen. Der Prüfschaltkreis verstärkt und detektiert eine Veränderung einer differenziellen Impedanz aufgrund der differenziellen Signalleitung. Der Prüfschaltkreis umfasst einen differenziellen Prüfverstärker.

US 2009/0125279 A1 beschreibt eine Vorrichtung und ein Verfahren zum Schätzen eines Eingabesignals im Zeitbereich aus einem empfangenen Signal eines differenziellen Kanals.

US 2002/0180414 A1 beschreibt ein Prüfverfahren für einen Ausgangstreiber zur Ausgabe eines differenziellen Signals.

OFFENBARUNG DER ERFINDUNG

Bei bekannten Überwachungseinrichtungen für eine differentielle Signalübertragungsstrecke sind an den Signalleitungen zusätzliche Schaltungen erforderlich, um einen Fehler zu erkennen. Der Schaltungsaufwand nimmt daher bei einer mehrkanaligen Übertragungsstrecke zu.

Außerdem können bekannte Überwachungsschaltungen, die an die Übertragung binärer Signale angepasst sind, nicht zur Überwachung bei der Übertragung von Signalen mit kontinuierlich oder über mehr als zwei Werte variierenden Signalamplituden herangezogen werden.

Aufgabe der Erfindung ist es, ein Verfahren zur Überwachung eines Funktionszustandes einer Übertragungsstrecke mit mehreren differentiellen Kanälen zu schaffen, mit dem ein Signalabfall, wie er beispielsweise bei einem Abriss oder einem Kurzschluss eines Leiters eines differentiellen Kanals auftritt, sicher detektiert werden kann.

Diese Aufgabe wird erfindungsgemäß gelöst durch ein Verfahren zur Überwachung eines Funktionszustandes einer Übertragungsstrecke mit mehreren Kanälen, die jeweils zur differentiellen Übertragung von Signalen eingerichtet sind, mit den Schritten:

- Einspeisen von differentiellen Signalen an einem ersten Ende der zu überwachenden Übertragungsstrecke;
- Wandeln der an einem zweiten Ende der zu überwachenden Übertragungsstrecke empfangenen Signale in Differenzsignale, wobei für jeden Kanal ein Differenzsignal gebildet wird;

dadurch gekennzeichnet, dass das Verfahren weiter umfasst:

- Vergleichen eines von der Verteilung der Werte der Differenzsignale der Kanäle abhängigen Gütemaßes mit einem Schwellwert. Beispielsweise wird in Abhängigkeit vom Vergleichsergebnis ein Funktionssignal erzeugt, das eine Fehlfunktion in wenigstens einem der Kanäle kennzeichnet.

Das Verfahren ermöglicht die Erkennung eines Fehlers lediglich durch Auswertung von übertragenen Signalen, d.h. ohne Messung zusätzlicher Parameter.

Vorzugsweise hängt das Gütemaß von der Verteilung der Logarithmen der Differenzsignale der Kanäle ab. Dadurch kann besonders gut eine Änderung, insbesondere ein Abfall, eines Signalpegels um einen Mindestwert d detektiert werden, d.h. eine Änderung bezogen auf den Logarithmus des Differenzsignals. Die Betrachtung der logarithmischen Werte der Differenzsignale und des zu detektierenden Signalabfalls bietet sich bevorzugt an, um einen Signalabfall zu detektieren, der sich multiplikativ auf die Signalspannung auswirkt. Beispielsweise tritt ein Abfall um 6 dB, entsprechend einer Halbierung der Spannung oder einer Halbierung der Signalenergie, auf, wenn von den beiden Leitern eines Kanals ein Leiter kein Signal liefert. Als Logarithmus wird hier und im folgenden vorzugsweise der dekadische Logarithmus verwendet.

Vorzugsweise hängt das Gütemaß von der Varianz der Differenzsignale über die Kanäle ab, besonders bevorzugt von der Varianz der Logarithmen der Differenzsignale über die Kanäle. Beispielsweise wird das Gütemaß aus den Logarithmen der Differenzsignale der Kanäle berechnet.

Die eingespeisten differentiellen Signale sind beispielsweise Testsignale.

Vorzugsweise umfasst das Verfahren den Schritt des Digitalisierens der gebildeten Differenzsignale. Der Vergleichsschritt kann dann vorteilhafterweise von einer Datenverarbeitungseinheit durchgeführt werden. Werden die empfangenen Signale ohnehin von einer Datenverarbeitungseinheit verarbeitet, so kann der Vergleichsschritt auf Empfängerseite von der Datenverarbeitungseinheit ausgeführt werden, so dass die Implementierung des Verfahrens besonders vereinfacht wird. Da das Gütemaß lediglich von den empfangenen Differenzsignalen abhängt, sind die Differenzsignale der Kanäle die einzigen Messgrößen, auf denen der Vergleich basiert. Der Vergleich kann somit anhand digitalisierter Differenzsignale erfolgen. Dies ist besonders vorteilhaft, wenn eine Digitalisierung von empfangenen Differenzsignalen im Betrieb der Übertragungsstrecke ohnehin vorgesehen ist. Zusätzliche Auswertungsschaltungen, die Kosten verursachen und Leiterplattenplatz benötigen, sind dann nicht erforderlich.

Vorzugsweise wird in dem Vergleichsschritt ein Schwellwert $\sigma_{th}^2$, für den die Bedingung (Gleichung 1)

$$\sigma_{th}^2 > \frac{n}{n-1} \cdot \frac{a^2}{4} \qquad (1)$$

erfüllt ist, mit dem Gütemaß in Form der Varianz (Gleichung 2)

$$\sigma^2 = \frac{1}{n-1} \cdot \sum_{i=1}^{n} (x_i - \mu)^2 \qquad (2)$$

verglichen, wobei

a die im funktionierenden Zustand der Übertragungsstrecke zu erwartende Spannweite (englisch: range) a der Differenzsignale ist, definiert als die Differenz zwischen dem größten und dem kleinsten Wert der logarithmischen Differenzsignale der Kanäle: $a = \max(x_1, ..., x_n) - \min(x_1,..., x_n)$;
n die Anzahl der differentiellen Kanäle ist;
$x_1, ..., x_n$ die Logarithmen der Differenzsignale der Kanäle 1 bis n sind; und
$\mu$ der Mittelwert der Logarithmen der Differenzsignale der Kanäle ist, d.h. der arithmetische Mittelwert der $x_1, ..., x_n$.

Dies ermöglicht es, einen Abfall (engl.: drop) d des logarithmischen Differenzsignals eines Kanals um einen Wert (Gleichung 3)

$$d = \sqrt{4n \cdot \sigma_{th}^2} \qquad\qquad (3)$$

sicher zu detektieren, da bei einem solchen Signalabfall die Varianz $\sigma^2$ mindestens den Schwellwert $\sigma_{th}^2$ annimmt. Insbesondere kann ein Abfall um d in sogar bis zu n-1 Kanälen sicher detektiert werden. Darüberhinaus wird durch die Bedingung der Gleichung (1) sichergestellt, dass im funktionierenden Zustand der Übertragungsstrecke der Schwellwert nicht erreicht wird. Somit wird eine falsche Fehlerdetektion ausgeschlossen. Ferner kann durch den Vergleich mit dem Schwellwert neben einem fehlerhaften Signalabfall auch ein fehlerhafter Signalanstieg in einem oder mehreren Kanälen um mindestens d detektiert werden.

Wenn beispielweise bei einer Übertragungsstrecke mit n = 4 differentiellen Kanälen für die eingespeisten differentiellen Signale im funktionierenden Zustand der Übertragungsstrecke empfangene Differenzsignale zu erwarten sind, deren Spannweite a kleiner als 2,57 dB ist, so kann durch die Wahl des Schwellwertes von $\sigma_{th}^2$ = 2,25 ein Abfall von d = 6 dB in einem Kanal, insbesondere sogar in bis zu drei Kanälen, mit Sicherheit detektiert werden.

Ein Abfall um 6 dB, der einer Halbierung des Differenzsignals entspricht, tritt beispielsweise im Falle eines Abrisses auf, bei dem ein Leiter eines Kanals unterbrochen ist, so dass für die Wandlung des empfangenen Signals in das Differenzsignal nur noch der halbe Wert der Signalspannung zur Verfügung steht. Die Erkennung eines solchen Funktionsfehlers ist von großer praktischer Bedeutung, wenn die Auswertung von empfangenen Signalen auf den Amplituden, insbesondere den relativen Amplituden der Differenzsignale der Kanäle basiert.

Zur Detektierung eines Kanalfehlers, der sich subtraktiv oder additiv auf die Signalspannung auswirkt, kann die oben und im folgenden beschriebene Verarbeitung der logarithmischen Werte in entsprechender Weise durch die Verarbeitung der nicht logarithmierten Werte ersetzt werden. Die Werte $x_1$, ..., $x_n$ sind dann die Differenzsignale der Kanäle 1 bis n, $\mu$ ihr Mittelwert, a = max($x_1$, ..., $x_n$) - min($x_1$, ..., $x_n$) ihre Spannweite, und d entspricht dem Betrag des zu detektierenden absoluten Abfalls oder Anstiegs des Differenzsignals eines Kanals. Beispielsweise kann bei gegebener Mindestsignalspannung am Empfangsort im funktionierenden Zustand auch ein Signalabfall, der einer Halbierung der Spannung entspricht, als subtraktiver Abfall um eine vom Signalwert abhängige Signalspannung aufgefasst werden und als subtraktiver Abfall um mindestens einen Mindestabfall d (d > 0) behandelt werden. Sofern die obige Gleichung (1) für die Spannweite a der nicht logarithmierten Differenzsignale erfüllt ist, kann wiederum sichergestellt werden, dass im funktionierenden Zustand der Übertragungsstrecke der Schwellwert, der die Gleichung (3) erfüllt, nicht erreicht wird.

Weiter wird die Aufgabe gelöst durch eine Überwachungseinrichtung für eine Übertragungsstrecke mit mehreren Kanälen, die jeweils zur differentiellen Übertragungen von Signalen eingerichtet sind, umfassend:

- wenigstens einen Wandler zum Wandeln von empfangenen differentiellen Signalen der zu überwachenden Übertragungsstrecke, wobei der wenigstens eine Wandler dazu eingerichtet ist, für jeden Kanal ein Differenzsignal zu bilden;

dadurch gekennzeichnet, dass die Überwachungseinrichtung weiter umfasst:

- eine Vergleichseinrichtung, die dazu eingerichtet ist, ein von der Verteilung der Werte der Differenzsignale der Kanäle abhängendes Gütemaß mit einem Schwellwert zu vergleichen und in Abhängigkeit des Vergleichsergebnisses ein Funktionssignal zu erzeugen.

Weitere vorteilhafte Ausgestaltungen der Erfindung sind in den Unteransprüchen angegeben.

KURZE BESCHREIBUNG DER ZEICHNUNGEN

Ausführungsbeispiele der Erfindung sind in den Zeichnungen dargestellt und in der nachfolgenden Beschreibung näher erläutert.

Es zeigen:

Fig. 1 ein Blockdiagramm einer Schaltung mit einer mehrkanaligen differentiellen Signalübertragungstrecke und einer Überwachungseinrichtung für dieselbe;

Fig. 2 ein Diagramm zur Veranschaulichung der Unterscheidbarkeit einer intakten Übertragungsstrecke und einer Übertragungsstrecke mit einem Pegelabfall; und

Fig. 3 ein Ablaufdiagramm eines Verfahrens zur Überwachung eines Funktionszustandes einer mehrkanaligen differentiellen Signalübertragungsstrecke.

DETAILLIERTE BESCHREIBUNG VON AUSFÜHRUNGSBEISPIELEN

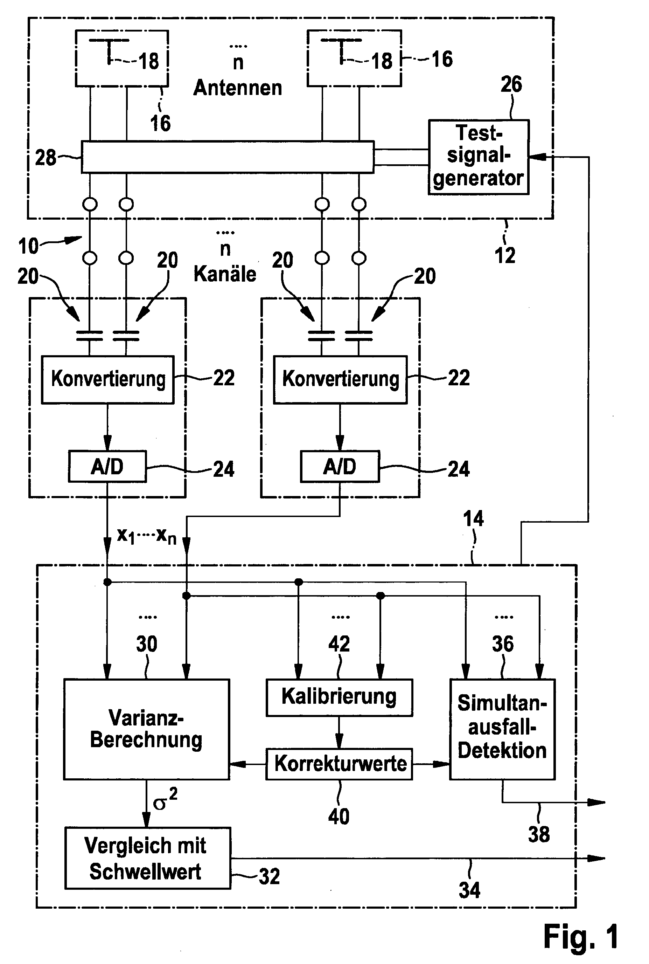

Die in Fig. 1 gezeigte Schaltung umfasst eine Übertragungsstrecke 10 mit mehreren Kanälen, die jeweils zur differentiellen Übertragung von Signalen eingerichtet sind. Die Anzahl der Kanäle wird mit n bezeichnet. Die Kanalzahl n ist vorzugsweise größer oder gleich 2, insbesondere größer oder gleich 4. Beispielsweise ist die Kanalzahl 4 (d.h.: n=4).

Die Schaltung umfasst weiter wenigstens ein Schaltungsmodul 12 und eine Datenverarbeitungseinheit 14, die über die Übertragungsstrecke 10 mit dem Schaltungsmodul 12 verbunden ist. Die Datenverarbeitungseinheit 14 ist beispielsweise dazu eingerichtet, von dem Schaltungsmodul 12 zur Verfügung gestellte Signale, die mittels differenzialer Übertragungstechnik über die Übertragungsstrecke 10 übertragen werden, zu verarbeiten, insbesondere auszuwerten. Die Datenverarbeitungseinheit 14 ist beispielsweise eine prozessorgesteuerte Datenverarbeitungseinheit, beispielsweise ein Microcontroller, oder eine Arithmetik-Logik-Einheit (ALU, arithmetic logic unit).

Bei dem Schaltungsmodul 12 handelt es sich beispielsweise um ein Halbleitermodul für Radaranwendungen mit Sende-/Empfangsmodulen 16 mit integrierten Antennenelementen 18 zum Senden und/oder Empfangen von Radarsignalen. Von den Antennenelementen 18 empfangene Radarsignale werden in an sich bekannter Weise auf ein Basisfrequenzband heruntergemischt. Das Schaltungsmodul 12 ist dazu eingerichtet, die heruntergemischten Basisbandsignale der einzelnen Sende-/Empfangsmodule 16 in Form differentieller Signale bereitzustellen und in die Übertragungstrecke 10 einzuspeisen.

Am anderen Ende der Übertragungsstrecke 10 sind die beiden Leiter eines jeweiligen Kanals über Koppelkondensatoren 20 mit einem jeweiligen Wandler 22 wechselspannungsgekoppelt. Der Wandler 22 ist dazu eingerichtet, das empfangene Signal eines Kanals in ein Differenzsignal zu wandeln. Dazu wird die Differenz der von den beiden Leitern eines Kanals empfangenen Signale gebildet, so dass etwaige Störungen, die sich auf beide Leiter eines Kanals in gleicher Weise auswirken, reduziert oder unterdrückt werden. Durch die Wechselspannungskopplung der in Serie mit den Leitern angeordneten Koppelkondensatoren 20 werden zudem etwaige Gleichspannungsanteile eines Kanals unterdrückt.

Das vom Wandler 22 gebildete Differenzsignal eines jeweiligen Kanals wird mittels eines A/D-Wandlers 24 digitalisiert und der Datenverarbeitungseinheit 14 in Form eines digitalen Wertes eines Spannungspegels, insbesondere des dekadischen Logarithmus' des Differenzsignals, zur Verfügung gestellt. Die Logarithmen der Differenzsignale werden im folgenden auch als logarithmische Differenzsignale bezeichnet und als $x_1$ bis $x_n$ für die jeweiligen Kanäle 1 bis n angegeben.

Die Datenverarbeitungseinheit 14 ist in an sich bekannter Weise dazu eingerichtet, die in Form der Differenzsignale $x_1$ bis $x_n$ erhaltenen Basisbandsignale der Sende-/Empfangsmodule 16 zur Ortung eines oder mehrerer Objekte auszuwerten. Die Schaltung ist beispielsweise Teil eines Radarsensors, insbesondere eines Kfz-Radarsensors zur Abstands- und/oder Geschwindigkeitsmessung von Objekten. Der Radarsensor ist beispielsweise Bestandteil eines Kfz-Radarsystems, insbesondere eines Kfz-Radarsystems eines Fahrerassistenzsystems. Je nach Architektur des Radarsensors kann insbesondere die Winkelauswertung georteter Objekte entscheidend auf den Amplituden der Differenzsignale basieren.

Wenn in einem der differentiellen Kanäle der Übertragungsstrecke 10 ein Leiter ausfällt, so kann dies typischerweise durch im wesentlichen zwei Fehlermechanismen hervorgerufen sein, die nachfolgend erläutert werden. Bei einem Abriss eines Leiters oder eines Koppelkondensators 20 verliert der entsprechende Wandlereingang den elektrischen Kontakt zur Übertragungsstrecke. Dadurch sinkt die zur Verarbeitung durch den Wandler 22 verfügbare Spannung um die Hälfte ab, entsprechend einem Abfall des Differenzsignals um 6 dB. Wird ein Leiter eines differentiellen Kanals gegen Masse oder gegen die Versorgungsspannung Vcc kurzgeschlossen, sinkt die für die Wandlung durch den Wandler 22 verfügbare Spannung ebenfalls um die Hälfte ab. Es ergibt sich ebenfalls ein Abfall des Differenzsignals um 6 dB.

Solche Defekte können durch die im folgenden beschriebene Überwachungseinrichtung der Schaltung detektiert werden. Dadurch kann verhindert werden, dass es aufgrund der falschen Signalpegel zu fehlerhaften Zielinterpretationen des Radarsensors kommt. Die Erkennung von Anschlussfehlern der beschriebenen Art ist insbesondere wichtig bei Schaltungen, bei denen das Schaltungsmodul 12 oder die Sende-/Empfangsmodule 16 als integrierte Mikrowellenschaltung des MMIC-Typs (microwave monolithic integrated circuit) ausgeführt sind und die differentiellen Basisbandsignale über externe Anschlusselemente, beispielsweise 3D-Verbindungsstrukturen in Form von Lotkugeln, mit einem weiteren Schaltungsteil, etwa einer Leiterplatte verbunden sind. Die Sende-/Empfangsmodule 16 sind beispielsweise als Wafer-Baugruppe des eWLB-Typs (embedded waver level ball grid array; eingebettetes Gitter-Array auf Waverebene) ausgeführt. Die Baugruppe ist dabei als IC-Bauelement mit einer Umverdrahtungsschicht für das IC-Bauelement auf Wafer-Ebene hergestellt.

Das Schaltungsmodul 12 ist zur Einspeisung eines Testsignals in die Kanäle der Übertragungsstrecke 10 eingerichtet. Beispielweise umfasst das Schaltungsmodul 12 einen Testsignalgenerator 26 und eine Schalteinrichtung 28, um anstelle der differentiellen Basisbandsignale ein differentielles Testsignal an dem ersten Ende der Übertragungsstrecke 10 in die Kanäle einzuspeisen. Der Testsignalgenerator 26 und die Schalteinrichtung 28 werden beispielsweise über einen externen Steuereingang von der Datenverarbeitungseinheit 14 angesteuert.

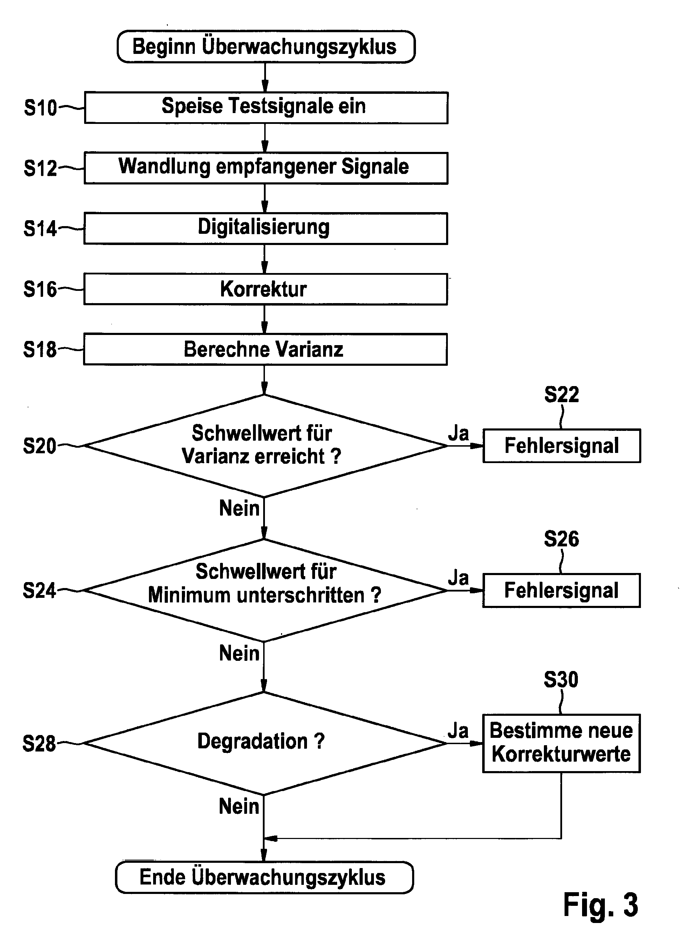

Die Datenverarbeitungseinheit 14 löst beispielsweise einen Überwachungszyklus aus, der das Einspeisen des Testsignals umfasst und weiter unten unter Bezugnahme auf Fig. 3 beschrieben wird. Der Überwachungszyklus wird beispielsweise in regelmäßigen Zeitabständen ausgelöst.

Das Testsignal, welches vorzugsweise für alle n Kanäle identisch ist, wird am anderen Ende der Übertragungsstrecke 10 in gleicher Weise wie die Basisbandsignale über die Koppelkondensatoren 20 und die Wandler 22 in jeweilige Differenzsignale gewandelt und mittels der A/D-Wandler 24 digitalisiert. Die erhaltenen logarithmischen Differenzsignale $x_1$ bis $x_n$ der n Kanäle werden einer Berechnungseinheit 30 zur Verfügung gestellt. Die Berechnungseinheit 30 ist dazu eingerichtet, ein von der Varianz der Logarithmen der Differenzsignale über die Kanäle abhängiges Gütemaß $\sigma^2$ zu berechnen. Bei dem Gütemaß handelt es sich vorzugsweise um die Varianz $\sigma^2$ gemäß der obigen Gleichung (2).

Eine Vergleichseinrichtung 32 der Datenverarbeitungseinheit 14 ist dazu eingerichtet, das berechnete Gütemaß mit dem sich aus der obigen Gleichung (3) ergebenden Wert für den Schwellwert $\sigma_{th}^2$ zu vergleichen, wobei der zu detektierende Abfall d den Wert d = 6 dB hat. Als Schwellwert für den Vergleich wird somit verwendet (Gleichung 4):

$$\sigma_{th}^2 = \frac{1}{n} \cdot \left(\frac{d}{2}\right)^2 \qquad\qquad (4)$$

Wenn das Gütemaß den Schwellwert erreicht, d.h. $\sigma^2 \geq \sigma_{th}^2$, gibt die Vergleichseinrichtung 32 ein entsprechendes Funktionssignal 34 aus. Dieses Funktionssignal 34 zeigt an, dass an wenigstens einem der n Kanäle ein Spannungsabfall um 6dB aufgetreten ist und kennzeichnet somit einen entsprechenden Defekt der Übertragungsstrecke 10. Das Funktionssignal 34 wird beispielsweise der Datenverarbeitungseinheit 14 zur Verfügung gestellt. Beispielsweise kann über das Funktionssignal 34 ein Interrupt der Datenverarbeitungseinheit 14 ausgelöst werden. Durch Vergleich des Gütemaßes mit dem Schwellwert kann ein definierter Signalabfall um d in bis zu n - 1 Kanälen, d.h. bis zu 3 Kanälen, sicher detektiert werden.

Optional umfasst die Datenverarbeitungseinheit 14 weiter eine Einheit 36 zur Detektion eines simultanen Ausfalls aller n Kanäle. Die Einheit 36 ist beispielsweise dazu eingerichtet, das Minimum der Logarithmen der Differenzsignale der n Kanäle mit einem zweiten Schwellwert zu vergleichen und bei Unterschreiten des Schwellwertes ein zweites Funktionssignal 38 zu erzeugen, welches den simultanen Ausfall aller n Kanäle kennzeichnet. Das Funktionssignal 38 kann in gleicher Weise wie das erste Funktionssignal 34 ausgewertet werden. Die Funktionssignale 34 und 38 können zusammengeschaltet oder logisch zusammengefasst werden zu einem gemeinsamen Funktionssignal, das eine Fehlfunktion in wenigstens einem Kanal der Übertragungsstrecke kennzeichnet.

Die Überwachung der Übertragungsstrecke 10 basiert darauf, dass im funktionstüchtigen Zustand der Übertragungsstrecke 10 bei Einspeisung des Testsignals die logarithmischen Differenzsignale $x_1$ bis $x_n$ eine Spannweite a aufweisen, die der obigen Gleichung (1) genügt. Bei der obigen Definition des Schwellwertes $\sigma_{th}^2$ muss also erfüllt sein (Gleichung 5):

$$a < \sqrt{\frac{n-1}{n^2} \cdot d^2} . \qquad\qquad (5)$$

Um die Spannweite a der Differenzsignale im funktionierenden Zustand der Übertragungsstrecke 10 möglichst gering zu halten, kann optional bei der Auswertung der Differenzsignale zur Berechnung der Varianz oder des Minimums für einen Kanal ein jeweiliger Korrekturwert berücksichtigt werden. Korrekturwerte 40 können beispielsweise in Form von Korrekturfaktoren oder Korrektursummanden für die Differenzsignale berücksichtigt werden. Die Korrekturwerte 40 können beispielsweise bei einer Kalibrierung in der Datenverarbeitungseinheit 14 abgelegt werden.

Weiter kann die Datenverarbeitungseinheit 14 optional eine Kalibrierungseinheit 42 umfassen, die dazu eingerichtet ist, die Korrekturwerte 40 basierend auf den Differenzsignalen $x_1$ bis $x_n$ zu kalibrieren. Beispielsweise erfolgt eine Kalibrierung dann, wenn die Spannweite a einen Kalibrierungsschwellwert überschreitet, der jedoch kleiner ist als die maximal zulässige Spannweite a nach Gleichung (5). Vorzugsweise wird eine Kalibrierung nur durchgeführt, wenn das Gütemaß $\sigma^2$ seinen Schwellwert nicht erreicht. Durch eine automatische und autonom durchgeführte Neukalibrierung kann somit eine Reduzierung der in funktionierendem Zustand der Übertragungsstrecke 10 auftretenden Spannweite a erreicht werden, wenn beispielsweise die Kanäle aufgrund von thermischen und/oder mechanischen Effekten von ihren ursprünglichen Parametern abweichen und dies zu einer Veränderung der Spannweite a führt. Dadurch kann auch bei allmählichen, im Laufe der Lebensdauer des Radarsensors auftretenden Veränderungen der Übertragungsparameter der Übertragungsstrecke 10 eine zuverlässige Überwachung sichergestellt werden.

Bei der Berechnungseinheit 30, der Vergleichseinrichtung 32, der Einheit 36 und/oder der Kalibrierungseinheit 42 kann es sich beispielsweise um Softwareeinheiten oder Softwaremodule der Datenverarbeitungseinheit 14 handeln.

Die beschriebene Überwachung basiert darauf, dass bei einem genügend großen Verhältnis aus dem zu detektierenden Signalabfall zu der "natürlichen" Variation der Signalpegel im Falle des Funktionierens der Übertragungsstrecke eine Detektierung des Signalabfalls um den Wert d sicher erfolgen kann.

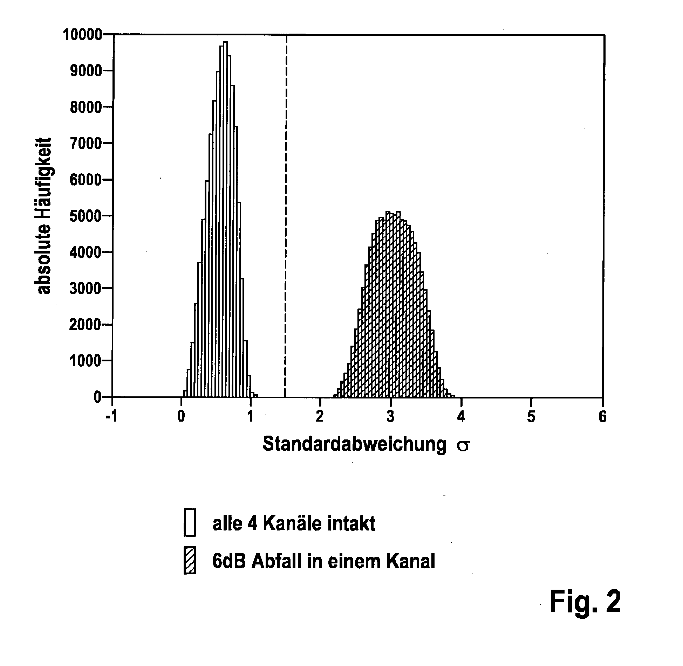

Fig. 2 veranschaulicht anhand simulierter Signalamplituden für ein vorgegebenes Test-signal die sich ergebende Variation der logarithmischen Differenzsignalamplituden. Dargestellt ist, jeweils für den Fall einer intakten Übertragungsstrecke und für den Fall eines Abfalls um 6 dB in einem Kanal, die Standardabweichung der Amplituden $x_1$ bis $x_n$ für das Beispiel mit vier Kanälen. Dabei wurde angenommen, dass im funktionierenden Zustand der Übertragungsstrecke 10 sich eine natürliche Variation der Kanalamplituden von 2 dB ergibt. Dargestellt ist jeweils die Häufigkeit der auf der Empfangsseite ermittelten Standardabweichung der logarithmischen Differenzsignale. Die Standardabweichung $\sigma$ entspricht der Wurzel aus der gemäß Gleichung (2) berechneten Varianz $\sigma_2$.

Auf der X-Achse ist der Wert einer Standardabweichung angegeben, und auf der Y-Achse ist die absolute Häufigkeit des Auftretens dieser Standardabweichung in der Simulation angegeben.

Für den Fall des Funktionierens der Übertragungsstrecke 10 liegen die erhaltenen Standardabweichungen $\sigma$ jeweils deutlich unter dem Wert $\sigma_{th}$ = 1,5, welcher dem Schwellwert $\sigma_{th}^2$ für die Varianz $\sigma^2$ entspricht und als gestrichelte Linie dargestellt ist.

Die bei dem simulierten Abfall eines Differenzsignals eines Kanals um 6 dB auftretenden Standardabweichungen sind schraffiert gekennzeichnet und liegen sämtlichst oberhalb von 1,5. Da es keinerlei Überlappung der Verteilungen für die beiden Fälle gibt, kann bereits aufgrund einer einzigen Messung der Differenzsignale ein Fehlerfall eindeutig und fehlerfrei detektiert werden.

Fig. 3 skizziert einen möglichen Ablauf des Verfahrens zur Überwachung des Funktionszustandes einer Übertragungsstrecke und entspricht beispielsweise der Arbeitsweise der Überwachungseinrichtung der Schaltung nach Fig. 1, wie sie oben erläutert wurde.

Wenn ein Überwachungszyklus ausgelöst wird, werden in Schritt S10 die Testsignale an dem ersten Ende der zu überwachenden Übertragungsstrecke 10 in die Kanäle der Überwachungsstrecke eingespeist. Die empfangenen Signale werden in Schritt S12 gewandelt, in Schritt S14 digitalisiert und optional in Schritt S16 mittels der Korrekturwerte 40 korrigiert.

In Schritt S18 erfolgt die Berechnung der Varianz $\sigma^2$ gemäß Gleichung (2).

In Schritt S20 wird die berechnete Varianz $\sigma^2$ mit dem Schwellwert $\sigma_{th}^2$ verglichen. Bei Erreichen des Schwellwertes erfolgt in Schritt S22 die Ausgabe des entsprechenden Funktionssignals 34 in Form eines Fehlersignals.

Wurde der Schwellwert nicht erreicht, so wird optional in einem weiteren Schritt S24 das Minimum der empfangenen Differenzsignale mit einem zweiten Schwellwert verglichen, und es erfolgt bei Unterschreitung des Schwellwertes die Ausgabe des zweiten Funktionssignals 38 in Form eines Fehlersignals in Schritt S26.

Anderenfalls erfolgt optional in Schritt S28 ein Vergleich der Spannweite a der Differenzsignale mit dem Kalibrierungsschwellwert für die Spannweite, und bei Unterschreitung des Schwellwertes wird in Schritt S30 wenigstens ein neuer Korrekturwert 40 für einen Kanal bestimmt.

Ein Überwachungszyklus ist damit beendet, und der Betrieb der Übertragungsstrecke wird wieder aufgenommen.

Während im beschriebenen Beispiel die Kopplungskondensatoren 20, die Wandler 22 und die A/D-Wandler 24 sowie die Datenverarbeitungseinheit 14 Teil der Schaltung sind, deren Übertragungsstrecke 10 zu überwachen ist, können sie alternativ auch als separate Baugruppe zur Verfügung gestellt werden. Vorzugsweise werden dann das Funktionssignal 34 und optional das zweite Funktionssignal 38 ausgegeben. Beispielsweise können sie in Form eines Interruptsignals an ein Gerät oder eine Schaltung ausgegeben werden, deren Übertragungsstrecke zu überwachen ist. Die Ansteuerung des Testsignalgenerators erfolgt dann beispielsweise durch das besagte Gerät.

Der Testsignalgenerator 26 und/oder die Schalteinrichtung 28 sind nicht notwendigerweise ein Bestandteil der Überwachungseinrichtung. So können Testsignale auch extern zur Verfügung gestellt werden. Gegebenenfalls können anstelle von Testsignalen auch andere Signale für die Überwachung verwendet werden, sofern diese im funktionierenden Zustand der Übertragungsstrecke zu Differenzsignalen mit ausreichend geringer Spannweite a führen.

Indem bei der beschriebenen Überwachungseinrichtung und dem beschriebenen Verfahren lediglich die von der Übertragungsstrecke übertragenen Signale gemessen werden, nicht aber beispielsweise eine Temperatur, Werksparameter oder ähnliche Größen, kann sowohl die Robustheit der Überwachung erhöht werden als auch der Herstellungsaufwand für die Überwachungseinrichtung verringert werden. Eine robuste und sichere Überwachung des Funktionszustandes der Übertragungsstrecke ist insbesondere sicherheitsrelevanten Anwendungen eines Radarsensors wie beispielsweise einem automatischen Notbremsassistenten besonders wichtig.

Die Überwachungseinrichtung und das Verfahren wurde beispielhaft zur Veranschaulichung der Erfindung bei Wechselspannungskopplung der Signale beschrieben und ermöglichen eine sichere Fehlerdetektion für die Fälle eines Signalabfalls in einem bis n Kanälen. Bei einer Schaltung ohne die Koppelkondensatoren 20 können die Fehlermechanismen eines Leiterabrisses oder einer Leiterunterbrechung sowie eines Kurzschlusses gegen Masse in entsprechender Weise durch den hervorgerufenen Signalabfall um 6 dB detektiert werden. Eine Fehlfunktion, bei der ein Kurzschluss eines oder mehrerer Kanäle gegen die Versorgungsspannung auftritt und nicht zu einem Abfall, sondern zu einem Signalanstieg führt, kann ebenfalls detektiert werden, sofern der dadurch verursachte Signalanstieg je Kanal wenigstens d beträgt; zur Detektion eines entsprechenden Simultanausfalls aller Kanäle führt die Einheit 36 dann beispielsweise einen Vergleich des Maximums der Signalpegel mit einem weiteren Schwellwert durch.

**Patentansprüche**

1. Verfahren zur Überwachung eines Funktionszustandes einer Übertragungsstrecke (10) mit mehreren Kanälen, die jeweils zur differentiellen Übertragung von Signalen eingerichtet sind, mit den Schritten:

   - Einspeisen (S10) von differentiellen Signalen an einem ersten Ende der zu überwachenden Übertragungsstrecke (10);
   - Wandeln (S12) der an einem zweiten Ende der zu überwachenden Überwachungsstrecke (10) empfangenen Signale in Differenzsignale, wobei für jeden Kanal ein Differenzsignal gebildet wird;

   **dadurch gekennzeichnet, dass** das Verfahren weiter umfasst:

   - Vergleichen (S20) eines von der Verteilung der Werte der Differenzsignale der Kanäle abhängigen Gütemaßes ($s^2$) mit einem Schwellwert ($s_{th}^2$).

2. Verfahren nach Anspruch 1, weiter umfassend den Schritt:

   - Digitalisieren (S14) der gebildeten Differenzsignale.

3. Verfahren nach Anspruch 1 oder 2, bei dem das Gütemaß ($s^2$) von der Varianz der Logarithmen der Differenzsignale über die Kanäle abhängt.

4. Verfahren nach einem der vorstehenden Ansprüche, bei dem im Schritt des Vergleichens der Schwellwert auf der Anzahl (n) der Kanäle der Übertragungsstrecke (10) und dem Wert einer zu detektierenden Signaländerung eines Kanals basiert.

5. Verfahren nach einem der vorstehenden Ansprüche, bei dem ein Gütemaß in Form der Varianz $$\sigma^2 = \frac{1}{n-1} \cdot \sum_{i=1}^{n} (x_i - \mu)^2$$ mit einem Schwellwert $\sigma_{th}^2 = \frac{1}{n} \cdot \left(\frac{d}{2}\right)^2$ verglichen wird, wobei n die Anzahl der Kanäle der Übertragungsstrecke (10) ist, $x_i$, ..., $x_n$ die Logarithmen der empfangenen Differenzsignale sind, $\mu$ der Mittelwert der Logarithmen der empfangenen Differenzsignale ist und d der Logarithmus eines zu detektierenden Abfalls eines Differenzsignals im Falle eines fehlerhaften Kanals ist.

6. Überwachungseinrichtung für eine Übertragungsstrecke (10) mit mehreren Kanälen, die jeweils zur differentiellen Übertragungen von Signalen eingerichtet sind, umfassend:

   - wenigstens einen Wandler (22) zum Wandeln von empfangenen differentiellen Signalen der zu überwachenden Übertragungsstrecke, wobei der wenigstens eine Wandler (22) dazu eingerichtet ist, für jeden Kanal ein Differenzsignal zu bilden;

   **dadurch gekennzeichnet, dass** die Überwachungseinrichtung weiter umfasst:

   - eine Vergleichseinrichtung (32), die dazu eingerichtet ist, ein von der Verteilung der Werte der Differenzsignale der Kanäle abhängendes Gütemaß ($s^2$) mit einem Schwellwert ($s_{th}^2$) zu vergleichen.

7. Überwachungseinrichtung nach Anspruch 6, weiter aufweisend wenigstens einen A/D-Wandler (24) zum Digitalisieren der gebildeten Differenzsignale.

8. Überwachungseinrichtung nach Anspruch 6 oder 7, wobei die Vergleichseinrichtung (32) durch eine Programmeinheit einer prozessorgesteuerten Datenverarbeitungseinheit (14) gebildet wird.

9. Überwachungseinrichtung nach einem der Ansprüche 6 bis 8, weiter aufweisend eine Berechnungseinheit (30) zur Berechnung des Gütemaßes ($s^2$) aus den Logarithmen der Differenzsignale der Kanäle der Übertragungsstrecke (10).

10. Überwachungseinrichtung nach einem der Ansprüche 6 bis 9, weiter aufweisend wenigstens einen Testsignalgenerator zum Erzeugen eines Testsignals für die Übertragungsstrecke (10).

11. Mehrkanaliger Radarsensor mit wenigstens einem Sende-/Empfangsmodul (16) für Radarsignale, wobei Basisbandsignale der Kanäle der wenigstens einen Sende-/Empfangseinheit (16) über eine mehrkanalige differentielle Signalübertragungsstrecke einer Datenverarbeitungseinheit (14) zugeführt werden, mit einer Überwachungseinrichtung für die Datenübertragungsstrecke (10) nach einem der Ansprüche 6 bis 10.

**Claims**

1. Method for monitoring a function state of a transmission link (10) having a plurality of channels that are each set up for the differential transmission of signals, having the steps of:

   - feeding in (S10) differential signals at a first end of the transmission link (10) that is to be monitored;
   - converting (S12) the signals received at a second end of the transmission link (10) that is to be monitored into difference signals, wherein a difference signal is formed for each channel;

   **characterized in that** the method additionally comprises:

   - comparing (S20) a quality measure ($s^2$), which is dependent on the distribution of the values of the difference signals from the channels, with a threshold value ($s_{th}^2$).

2. Method according to Claim 1, additionally comprising the step of:

   - digitizing (S14) the difference signals formed.

3. Method according to Claim 1 or 2, in which the quality measure ($s^2$) is dependent on the variance of the logarithms of the difference signals over the channels.

4. Method according to one of the preceding claims, in which the step of comparing the threshold value is based on the number (n) of channels of the transmission link (10) and the value of a signal change that can be detected for a channel.

5. Method according to one of the preceding claims, in which a quality measure in the form of the variance

$$\sigma^2 = \frac{1}{n-1} \cdot \sum_{i=1}^{n} (x_i - \mu)^2$$ is compared to the threshold

value $$\sigma_{th}^2 = \frac{1}{n} \cdot \left(\frac{d}{2}\right)^2$$ where n is the number of channels of the transmission link (10), $x_i$, ..., $x_n$ are the

logarithms of the received difference signals, $\mu$ is the mean value of the logarithms of the received difference signals and d is the logarithm of a drop that can be detected for a difference signal in the event of an erroneous channel.

6. Monitoring device for a transmission link (10) having a plurality of channels that are each set up for the differential transmission of signals, comprising:

   - at least one converter (22) for converting received differential signals from the transmission link that is to be monitored, wherein the at least one converter (22) is set up to form a difference signal for each channel;

   **characterized in that** the monitoring device additionally comprises:

- a comparison device (32) that is set up to compare a quality measure ($s^2$), which is dependent on the distribution of the values of the difference signals from the channels, with a threshold value ($s_{th}^2$).

7. Monitoring device according to Claim 6, additionally having at least one A/D converter (24) for digitizing the difference signals formed.

8. Monitoring device according to Claim 6 or 7, wherein the comparison device (32) is formed by a program unit of a processor-controlled data processing unit (14).

9. Monitoring device according to one of Claims 6 to 8, additionally having a computation unit (30) for computing the quality measure ($s^2$) from the logarithms of the difference signals from the channels of the transmission link (10).

10. Monitoring device according to one of Claims 6 to 9, additionally having at least one test signal generator for generating a test signal for the transmission link (10).

11. Multichannel radar sensor having at least one transmission/reception module (16) for radar signals, wherein baseband signals from the channels of the at least one transmission/reception unit (16) are supplied to a data processing unit (14) via a multichannel differential signal transmission link, having a monitoring device for the data transmission link (10) according to one of Claims 6 to 10.

**Revendications**

1. Procédé de surveillance de l'état de fonctionnement d'un parcours de transmission (10) présentant plusieurs canaux conçus chacun pour la transmission différentielle de signaux, le procédé comportant les étapes qui consistent à :

   injecter (S10) des signaux différentiels à une première extrémité du parcours de transmission (10) à surveiller, convertir (S12) les signaux reçus à une deuxième extrémité du parcours de transmission (10) à surveiller en signaux différentiels, un signal différentiel étant formé pour chaque canal,

   **caractérisé en ce que** le procédé comporte en outre l'étape qui consiste à :

   c omparer (S20) une mesure de qualité ($s^2$) qui dépend de la distribution des valeurs des signaux différentiels des canaux à une valeur de seuil ($s_{th}^2$).

2. Procédé selon la revendication 1, comprenant en outre l'étape qui consiste à numériser (S14) les signaux différentiels formés.

3. Procédé selon les revendications 1 ou 2, dans lequel la mesure de qualité ($s^2$) dépend de la variance des logarithmes des signaux différentiels sur les canaux.

4. Procédé selon l'une des revendications précédentes, dans lequel lors de l'étape de comparaison, la valeur de seuil est basée sur le nombre (n) des canaux du parcours de transmission (10) et sur la valeur d'une modification de signal à détecter sur un canal.

5. Procédé selon l'une des revendications précédentes, dans lequel une mesure de qualité qui présente la forme de

   la variance $\sigma^2 = \dfrac{1}{n-1} \cdot \sum_{i=1}^{n} (x_i - \mu)^2$ est comparée a une valeur de seuil $\sigma_{th}^2 = \dfrac{1}{n} \cdot \left(\dfrac{d}{2}\right)^2$ n représentant le nombre des canaux du parcours de transmission (10), $x_i$, ..., $x_n$ les logarithmes des signaux différentiels reçus, $\mu$ la valeur moyenne des logarithmes des signaux différentiels reçus et d le logarithme d'une diminution à détecter d'un signal différentiel au cas où un canal est défectueux.

6. Dispositif de surveillance d'un parcours de transmission (10) présentant plusieurs canaux conçu pour la transmission différentielle de signaux, le dispositif comprenant :

au moins un convertisseur (22) qui convertit des signaux différentiels reçus sur les parcours de transmission à surveiller, le ou les convertisseurs (22) étant conçus pour former un signal différentiel pour chaque canal,

**caractérisé en ce que**

l e dispositif de surveillance comporte en outre un dispositif de comparaison (32) conçu pour comparer une mesure de qualité ($s^2$) qui dépend de la distribution des valeurs des signaux différentiels des canaux à une valeur de seuil ($s_{th}^2$).

7.  Dispositif de surveillance selon la revendication 6, présentant en outre au moins un convertisseur analogique-numérique (24) qui numérise les signaux différentiels formés.

8.  Dispositif de surveillance selon les revendications 6 ou 7, dans lequel le dispositif de comparaison (32) est formé par une unité de programme d'une unité (14) de traitement de données commandée par processeur.

9.  Dispositif de surveillance selon l'une des revendications 6 à 8, présentant en outre une unité de calcul (30) qui calcule la mesure de qualité ($s^2$) à partir des logarithmes des signaux différentiels des canaux du parcours de transmission (10).

10. Dispositif de surveillance selon l'une des revendications 6 à 9, présentant en outre au moins un générateur de signaux de test qui forme un signal de test du parcours de transmission (10).

11. Capteur radar multicanaux présentant au moins un module (16) d'émission-réception de signaux radar, les signaux en bande de base des canaux de la ou des unités (16) d'émission et de réception étant amenés par un parcours de transmission de signaux différentiels multicanaux à une unité (14) de traitement de données, et présentant un dispositif de surveillance du parcours (10) de transmission des signaux selon l'une des revendications 6 à 10.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0621702 A2
- DE 10237696 B3
- US 20080238442 A1
- US 20090125279 A1
- US 20020180414 A1